# EUROPÄISCHE PATENTANMELDUNG

(11) **EP 2 902 152 A1**
(43) Veröffentlichungstag der Anmeldung: **05.08.2015**
(21) Anmeldenummer: 14161273.9
(22) Anmeldetag: 24.03.2014
(51) Int. Cl.: B24B 13/005, B24B 41/06

(54) **Linsenhaltevorrichtung zum Haltern einer Rohlinse in einer Bearbeitungsmaschine und Verfahren zur Bearbeitung von Rohlinsen**

(30) Priorität: 03.02.2014 DE 102014101266
(71) Anmelder: OptoTech Optikmaschinen GmbH, 35435 Wettenberg (DE)
(72) Erfinder: Mandler, Roland, 35452 Heuchelheim (DE)
(74) Vertreter: Patentanwälte Olbricht Buchhold Keulertz

(57) **Zusammenfassung**

Die Erfindung betrifft eine Linsenhaltevorrichtung zum Haltern einer Rohlinse in einer Bearbeitungsmaschine. Diese weist eine Werkzeugaufnahme zum Festlegen der Linsenhaltevorrichtung in einem Bearbeitungswerkzeug und eine Werkstückaufnahme zur Aufnahme einer zu bearbeitenden Rohlinse auf. Dabei hat die Werkstückaufnahme eine gekrümmte Oberfläche und ist mit der Werkzeugaufnahme verbunden. Ein Luftkanal führt von der Werkzeugaufnahme zur gekrümmten Oberfläche der Werkstückaufnahme. Zusätzlich weist die Werkstückaufnahme ein Adhäsionselement auf, das zumindest teilweise die gekrümmte Oberfläche ausbildet, wobei das Adhäsionselement an der gekrümmten Oberfläche adhäsive Eigenschaften hat.

Außerdem betrifft die Erfindung ein Verfahren zur Bearbeitung von Rohlinsen mit einer solchen Halterung, wobei wenigstens ein Arbeitsschritt mit einer Halterung der Rohlinse an der Haltevorrichtung durch Vakuumerzeugung und das Adhäsionselement sowie wenigstens ein Arbeitsschritt mit einer Halterung ausschließlich durch das Adhäsionselement durchgeführt werden.

## Beschreibung

Die Erfindung betrifft Linsenhaltevorrichtung zum Haltern einer Rohlinse in einer Bearbeitungsmaschine gemäß dem Oberbegriff von Anspruch 1 sowie ein Verfahren zur Bearbeitung von Rohlinsen nach Anspruch 10.

Zur Bearbeitung von Rohlinsen, insbesondere in der Massenproduktion von individuellen Brillengläsern, werden diese wenigstens auf einer von zwei gegenüberliegenden Linsenflächen nachbearbeitet. Die andere Seite ist oftmals bereits beim Herstellen der Rohlinse mit der endgültigen Geometrie und Oberflächengüte ausgebildet.

Um die Bearbeitungsseite der Rohlinse mechanisch durch Drehen, Fräsen, Schleifen und Zuschneiden bearbeiten zu können, sind verschiedene Linsenhaltevorrichtungen aus dem Stand der Technik bekannt.

So zeigen DE 10 2008 023 093 A1, WO 2010/140958 A1 und US 6 036 313 A jeweils eine Linsenhaltevorrichtung zum Haltern einer Rohlinse in einer Bearbeitungsmaschine. Diese weist jeweils eine Werkzeugaufnahme zum Festlegen der Linsenhaltevorrichtung in einem Bearbeitungswerkzeug auf. Einstückig mit der Werkzeugaufnahme ist eine Werkstückaufnahme zur Aufnahme einer zu bearbeitenden Rohlinse vorgesehen. Die Werkstückaufnahme hat eine gekrümmte Oberfläche. Zur Fixierung der Rohlinse an der Werkstückaufnahme wird jeweils ein aushärtender Klebstoff vorgesehen. DE 10 2008 023 093 A1 setzt hierfür einen UV-Kleber ein, wohingegen WO 2010/140958 A1 und US 6 036 313 A einen Thermoplasten zum Kleben nutzen. Der Vorgang zur Erzeugung von derartigen festen Verbindungen zwischen einer Rohlinse und einer Linsenhaltervorrichtung wird auch als Aufblocken bezeichnet.

Ähnliche Aufblockverfahren setzen sogenannte Alloys als aushärtenden Klebstoff ein. So beschreibt beispielsweise DE 694 02 900 T2 ein Aufblocken mit Alloys aus Blei-, Cadmium-, Indium-, Wismut- und Zinnlegierungen.

Nachteilhaft an den Aufblockverfahren ist, dass diese verhältnismäßig lange dauern und die Rohlinsen nur aufwendig wieder abzulösen sind. Dabei ist das Blockmaterial, insbesondere ein Klebstoff oder ein Thermoplast, nicht wieder verwendbar. Es entsteht mithin viel und teilweise umweltgefährdender Abfall nach jedem einzelnen Aufblocken. Von einem Alloy gehen bei jedem Aufblockvorgang wenigstens 1% bis 2% verloren. Diese geringen Mengen sind jedoch hochgiftige Schwermetalle. Schätzungsweise gelangen durch das Aufblocken in der heutigen Brillenglasfertigung weltweit einige hundert Tonnen Alloy unkontrolliert in die Umgebung.

Eine Alternative zu den Aufblockverfahren bilden Vakuumhalter. Bei diesen führt ein Luftkanal durch eine spindelförmige Werkzeugaufnahme bis in eine Austrittsöffnung in einer gekrümmten Oberfläche. Die gekrümmte Oberfläche steht mit der nicht zu bearbeitenden Oberfläche einer Rohlinse in Kontakt. Durch Erzeugung eines Unterdrucks im Luftkanal wird die Rohlinse während der maschinellen Bearbeitung an der gekrümmten Oberfläche angesaugt. Eine derartige Halterung wird beispielsweise von DE 10 2012 101 581 A1 beschrieben.

Nachteilhaft an einer Maschine gemäß DE 10 2012 101 581 A1 ist, dass die Linsenhaltevorrichtung fest mit der Bearbeitungsmaschine verbunden ist. Für unterschiedliche Linsenradien ist zudem je eine andere gekrümmte Oberflächenkrümmung vorzusehen. Deshalb ist ein Revolver mit unterschiedlich gekrümmten Linsenhaltevorrichtungen notwendig. Darüber hinaus müssen Rohlinsen gemäß DE 10 2012 101 581 A1 ohne einen Halter in die Bearbeitungsmaschine geladen und ohne Halter wieder entnommen werden. Sofern weitere Arbeitsschritte abseits der Bearbeitungsmaschine am Brillenglas erforderlich sind, ist gegebenenfalls erneut eine Befestigung der Rohlinse an einer Linsenhaltevorrichtung notwendig.

Aufgabe der Erfindung ist es daher, die Nachteile des Standes der Technik zu überwinden und eine Linsenhaltevorrichtung sowie ein Verfahren zu entwickeln, mit welchen Rohlinsen auf einfache Art und Weise sicher bei der Bearbeitung gehaltert werden können, wobei unnötige Arbeitsschritte sowie umweltschädliche Abfälle vermieden oder zumindest reduziert werden sollen. Die Vorrichtung und das Verfahren sollen außerdem kostengünstig und zuverlässig sein.

Hauptmerkmale der Erfindung sind im kennzeichnenden Teil von Anspruch 1 sowie Anspruch 10 angegeben. Ausgestaltungen sind Gegenstand der Ansprüche 2 bis 9 sowie 11 und 12.

Die Erfindung betrifft eine Linsenhaltevorrichtung zum Haltern einer Rohlinse in einer Bearbeitungsmaschine. Diese weist eine Werkzeugaufnahme zum Festlegen der Linsenhaltevorrichtung in einem Bearbeitungswerkzeug und eine Werkstückaufnahme zur Aufnahme einer zu bearbeitenden Rohlinse auf. Dabei hat die Werkstückaufnahme eine gekrümmte Oberfläche und ist mit der Werkzeugaufnahme verbunden (vorzugsweise fest). Ein Luftkanal führt von der Werkzeugaufnahme zur gekrümmten Oberfläche der Werkstückaufnahme. Zusätzlich weist die Werkstückaufnahme ein Adhäsionselement auf, das zumindest teilweise die gekrümmte Oberfläche ausbildet, wobei das Adhäsionselement an der gekrümmten Oberfläche adhäsive Eigenschaften hat.

Vorteilhaft an einer derartigen Ausgestaltung ist, dass eine Rohlinse bei der Bearbeitung, insbesondere mit mechanischen Werkzeugen durch einen Unterdruck im Luftkanal sowie über der gekrümmten Oberfläche und zusätzlich durch das Adhäsionselement fixiert werden kann. Der Luftkanal dient also der Erzeugung einer Saugkraft zwischen der gekrümmten Oberfläche und einer Rohlinse. Eine sicherheitstechnisch relevante Fixierung ist durch die erfindungsgemäße Ausgestaltung selbst bei einem Ausfall des mit dem Luftkanal in Verbindung stehenden Saugkreises sicherstellbar.

Zusätzlich kann die Rohlinse insbesondere zwischen verschiedenen mechanischen Bearbeitungen mit der Linsenhaltevorrichtung transportiert werden. Die Fixierung der Rohlinse an der Linsenhaltevorrichtung kann bei diesen Arbeitsschritten allein auf dem Adhäsionselement basieren. Hierfür sollten die adhäsiven Eigenschaften des Adhäsionselements so stark ausgelegt sein, dass eine gehalterte Rohlinse in keiner Winkellage abfällt. Vorzugsweise sind die adhäsiven Eigenschaften des Adhäsionselements derart ausgelegt, dass eine gehalterte Rohlinse mit einer Haltekraft gehaltert wird, welche wenigstens dem zweifachen, vorzugsweise wenigstens dem dreifachen des Rohlinsengewichts entspricht.

Bevorzugt weist die Linsenhaltevorrichtung eine Rotationsachse auf, welche die gekrümmte Oberfläche im Zentrum lotrecht schneidet, insbesondere so, dass die gekrümmte Oberfläche in einer gekrümmten Rotationsfläche rotierbar ist. Damit kann die Rohlinse mit der Linsenhaltevorrichtung während der Bearbeitung rotiert werden. Diese Rotation stabilisiert die Lage der Rohlinse bei der Bearbeitung und ein Werkzeug muss weniger aktive Bewegungen durchführen. Hierbei sollte die Werkzeugaufnahme koaxial zur Rotationsachse ausgebildet sein. Derartige Werkzeugaufnahmen werden auch als Spindelverbindung bezeichnet. Der Luftkanal kann dann aus der Spindelverbindung ausmünden, insbesondere zentral entlang der Rotationsachse durch die Spindelverbindung.

Für eine möglichst erfolgreiche Verbreitung der Linsenhaltevorrichtung bietet es sich an, die Spindelverbindung als Standardverbindung auszubilden, insbesondere indem die Spindelverbindung einer Ausgestaltung entsprechend DIN 58766 entspricht.

In einer speziellen Ausgestaltung der Erfindung ist das Adhäsionselement eine Folie oder eine Matte. Damit kann eine besonders große Oberfläche mit adhäsiven Eigenschaften bereitgestellt werden. Vorzugsweise bildet das Adhäsionselement die gesamte gekrümmte Oberfläche aus. Damit ist die adhäsive Oberfläche maximiert. Der Luftkanal sollte dann durch ein Loch im Adhäsionselement in der gekrümmten Oberfläche ausmünden. Zudem schützt das Adhäsionselement die nicht zu bearbeitende Oberfläche bzw. die Aufnahmeseite der Rohlinse vor Kratzern. Das Adhäsionselement ist nämlich vorzugsweise aus einem weicheren Material ausgebildet als die Werkzeugaufnahme.

Grundsätzlich besteht die Möglichkeit, das Adhäsionselement auf der gekrümmten Oberfläche mit einem Adhäsiv zu beschichten. Eine bevorzugte Variante der Erfindung sieht allerdings vor, dass das Adhäsionselement aus einem adhäsiven Material besteht. Hierdurch ist der Aufbau der Linsenhaltevorrichtung einfach.

Vorzugsweise ist das Adhäsionselement eine Adhäsionsfolie oder eine Adhäsionsmatte. Eine Adhäsionsfolie ist auf einfache Weise durch Zuschneiden einer Bahn aus adhäsivem Material herstellbar. Der Vorteil einer Adhäsionsmatte liegt insbesondere in der Möglichkeit eine dreidimensionale Ausgestaltung vorzusehen, welche unter anderem eine Vorformung entsprechend der gekrümmten Oberfläche umfassen kann, wodurch Spannungen und Faltungen bei der Montage vermieden werden. Eine Adhäsionsmatte ist außerdem mit feineren Strukturen wie Rillen in der gekrümmten Oberfläche versehbar, um das Vakuum gleichmäßig über die gekrümmte Oberfläche aufbauen zu können. So kann das Adhäsionselement insbesondere auf der gekrümmten Oberfläche Rillen aufweisen, wobei die Rillen mit dem Luftkanal in Verbindung stehen. Die Rillen können einen Rillenboden aufweisen, welcher von einem darunter befindlichen Bauteil ausgebildet ist, welches das Adhäsionselement trägt. Aus Montagegründen, insbesondere der Handhabung, ist es jedoch zu bevorzugen, etwaige Rillen mit einem Rillenboden zu versehen, welcher von dem Adhäsionselement ausgebildet ist.

Gemäß einer erfindungsgemäßen Variante sind die adhäsiven Eigenschaften des Adhäsionselements durch Van-der-Waals-Kräfte bewirkt. Die Adhäsionswirkung tritt bei einer derartigen Ausgestaltung besonders schnell ein, zum Beispiel bei einem Andrücken einer Rohlinse an das Adhäsionselement. Es ist keine Aushärtung notwendig. Außerdem lässt sich eine Verbindung basierend auf Van-der-Waals-Kräften meist rückstandsfrei lösen. Damit ist keine Schutzschicht oder Schutzfolie auf der Rohlinse notwendig.

Eine spezielle Ausgestaltung der Erfindung sieht vor, dass das Adhäsionselement auf Polyvinylchlorid, Polyethylen oder Silikon (insbesondere auf Poly(organo)siloxanen) basiert. Vertreter dieser Materialien haben eine hinreichend große adhäsive Hafteigenschaft bezüglich Rohlinsen aus Glas oder Kunststoff. Außerdem lassen sie sich rückstandslos von den Rohlinsen entfernen.

Eine weitere nähere Ausgestaltung der Erfindung sieht vor, dass das Adhäsionselement austauschbar ist. Hierzu sollte insbesondere die Befestigung des Adhäsionselements am Rest der Linsenhaltevorrichtung mechanisch oder chemisch lösbar sein. Bei Befestigungen mit Klebstoff bietet sich beispielsweise ein Ablösen mittels Aceton an.

Bei einem speziellen Aufbau der Erfindung weist das Adhäsionselement eine Materialstärke von 0,5 mm bis 1,5 mm auf, vorzugsweise eine Materialstärke (Materialdicke) von 0,7 mm bis 1,3 mm und besonders bevorzugt von 0,9 mm bis 1,1 mm. Ausgenommen hiervor sind Bereiche mit etwaigen Rillen im Adhäsionselement. Damit ist das Adhäsionselement dick genug, um sich an die Krümmung einer Rohlinse anzupassen, insbesondere durch elastische Verformung und im Mikrometerbereich. Gleichzeitig ist das Material jedoch so dünn, dass eine stabile Halterung mit nur sehr geringen elastischen Bewegungen zwischen der Linsenhaltevorrichtung und der Rohlinse besteht.

Bei einer Ausgestaltung des Adhäsionselements als Folie ist die Materialstärke ausgenommen im Bereich etwaiger Rillen konstant. Eine Matte kann auch mit stärkeren und dünneren Bereichen ausgestaltet sein.

Zur Aufnahme von Rohlinsen zur Brillenglasfertigung bietet es sich an, die gekrümmte Oberfläche sphärisch auszubilden, denn dies ist die bevorzugte Formgebung einer nicht zu bearbeitenden Oberfläche dieser Rohlinsen. Insbesondere sollte die gekrümmte Oberfläche auf eine Standard-CX-Kurve einer Rohlinse für die Rezeptfertigung von Brillengläsern abgestimmt sein. Außerdem ist meist die konkave Linsenseite dieser Rohlinge zu bearbeiten, weswegen die gekrümmte Oberfläche der Werkstückaufnahme bevorzugt konkav ist.

Des Weiteren sieht eine spezielle Ausgestaltung der Erfindung vor, dass die Werkstückaufnahme ein Trägerelement aufweist, welches einteilig, vorzugsweise monolithisch, mit der Werkzeugaufnahme ausgebildet ist und welches das Adhäsionselement trägt. Damit besteht die Linsenhaltevorrichtung aus sehr wenigen Bauteilen und ist kostengünstig. Das Adhäsionselement ist dann mit dem Trägerelement verbunden. Es empfiehlt sich eine Klebeverbindung. Als Materialien eignen sich für das Trägerelement und/oder die Werkzeugaufnahme Kunststoffe oder Metalle. Zumindest sollten die Werkzeugaufnahme und/oder das Trägerelement aus einem härteren Material bestehen als das Adhäsionselement.

Damit eine Rohlinse gut bis zu ihrem Randbereich bearbeitet werden kann, sollte die Linsenhaltevorrichtung einen kleineren Durchmesser aufweisen, als eine zu halternde Rohlinse.

Die Erfindung betrifft außerdem ein Verfahren zur Bearbeitung von Rohlinsen mit einer wie zuvor beschriebenen Linsenhaltevorrichtung, wobei zunächst eine Rohlinse an die gekrümmte Oberfläche angedrückt wird. Hierbei sollte die Rohlinse relativ zur Linsenhaltevorrichtung zentriert werden. Anschließend wird die Rohlinse während einer mechanischen Bearbeitung durch die adhäsiven Eigenschaften des Adhäsionselements und durch Erzeugung eines Unterdrucks im Luftkanal sowie zwischen der gekrümmten Oberfläche und der Rohlinse an der Linsenhaltevorrichtung fixiert. Vor oder nach dieser mechanischen Bearbeitung wird ein Arbeitsschritt (vorzugsweise ohne mechanische Bearbeitung) durchgeführt, wobei die Rohlinse ausschließlich durch die adhäsiven Eigenschaften des Adhäsionselements gehaltert wird. Ein solcher Arbeitsschritt kann beispielsweise eine Wartezeit oder ein Transport zwischen zwei Werkzeugen sein. Damit ist das Verfahren besonders einfach durchführbar, denn eine Unterdruckerzeugung kann zwischen verschiedenen Arbeitsschritten unterbrochen werden.

Eine Ergänzung des Verfahrens sieht vor, dass ein Lösen der Rohlinse von der Linsenhaltevorrichtung durch Vibrations-, Schlag- und/oder Druckbeaufschlagung zur Überwindung der adhäsiven Halterung an dem Adhäsionselement erfolgt. Das Lösen ist erfindungsgemäß besonders schnell und rückstandslos. Damit sind keine Nacharbeiten auf der nicht zu bearbeitenden Seite der Rohlinse notwendig.

Ferner sieht eine spezielle Variante des Verfahrens vor, dass die zuvor beschriebenen Verfahrensschritte wiederholt werden, bevorzugt mit unterschiedlichen Rohlinsen, und ein Austausch des Adhäsionselements nach frühestens zehn, vorzugsweise frühestens nach einhundert, Wiederholungen erfolgt. Damit entsteht pro bearbeitete Rohlinse wenig Abfall durch das Haltern mit der Linsenhaltevorrichtung.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Es zeigt:

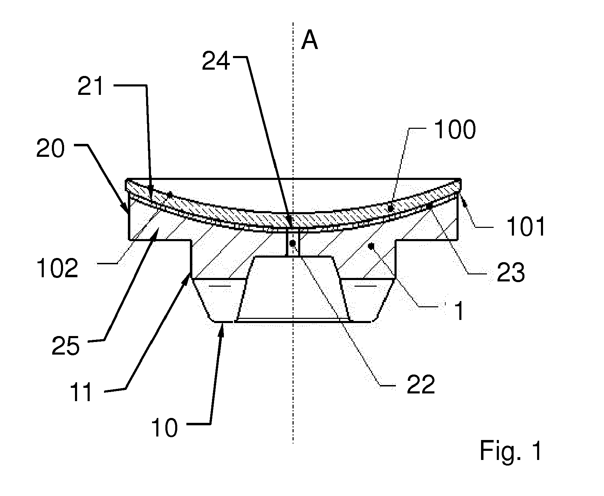

Fig. 1 eine Linsenhaltevorrichtung mit aufgenommener Rohlinse.

Fig. 1 zeigt eine Linsenhaltevorrichtung 1, welche eine Rohlinse 100 haltert. Die Linsenhaltevorrichtung 1 weist eine Werkzeugaufnahme 10 zum Festlegen der Linsenhaltevorrichtung 1 in einem Bearbeitungswerkzeug auf. Dabei ist die Werkzeugaufnahme 10 koaxial zur Rotationsachse A ausgebildet, insbesondere auch rotationssymmetrisch um die Rotationsachse A. Man erkennt, dass die Werkzeugaufnahme 10 eine Spindelverbindung 11 ist. Die radiale Außenwandung der Spindelverbindung setzt sich zusammen aus einem zylindrischen Abschnitt und einer kegelförmigen Einführschräge. Die Stirnfläche der Spindelverbindung 11 weist eine kegelstumpfförmige Vertiefung auf.

Diese Spindelverbindung 11 lässt sich mit einer Standardaufnahme einer Bearbeitungsmaschine aufnehmen, insbesondere wenn diese Standardaufnahme einer Ausgestaltung entsprechend DIN 58766 entspricht.

Weiterhin verfügt die Linsenhaltevorrichtung 1 über eine Werkstückaufnahme 20 zur Aufnahme der zu bearbeitenden Rohlinse 100. Die Werkstückaufnahme 20 setzt sich zusammen aus einem Trägerelement 25 und einem Adhäsionselement 23. Das Trägerelement 25 ist einteilig, insbesondere monolithisch, mit der Werkzeugaufnahme 10 ausgebildet und trägt das Adhäsionselement 23. Als Materialien für dieses einteilige Bauteil bestehend aus Werkzeugaufnahme 10 und Trägerelement 23 eignen sich Kunststoffe oder ein Metalle.

Zur Aufnahme des Adhäsionselements 23 ist das Trägerelement 35 Teller oder schüsselförmig ausgebildet und steht mit einer Seite in Verbindung mit der Werkzeugaufnahme 10 wobei das Trägerelement 25 ebenfalls rotationssymmetrisch zur Rotationsachse A ausgebildet ist. Außerdem hat das Trägerelement 25 einen größeren Durchmesser als die Werkzeugaufnahme 10.

Auf der freien Seite, sozusagen der Tellerfläche, hat das Trägerelement 25 eine gekrümmte Oberfläche, welche konkav und sphärisch sowie auf eine Standard-CX-Kurve einer Rohlinse 100 für die Rezeptfertigung von Brillengläsern abgestimmt ist. Auf dieser Oberfläche ist das Adhäsionselement 23 mit dem Trägerelement 25 verbunden, insbesondere verklebt. Durch Lösen der Verklebung, z.B. durch chemisches Lösen, wofür sich je nach Klebstoff beispielsweise Aceton eignet, kann das Adhäsionselement 23 bei Verschleiß ausgetauscht werden.

Das Adhäsionselement 23 ist als eine Adhäsionsfolie ausgebildet, welche eine konstant Materialstärke von bevorzugt 0,5 mm bis 1,5 mm aufweist. Zur Vermeidung von Spannungen oder Faltenwurf im Adhäsionselement 23 kann eine solche Adhäsionsfolie vor dem Verbinden entsprechend der gekrümmten Oberfläche des Trägerelements 25 vorgeformt werden, z.B. durch Tiefziehen, gegebenenfalls unmittelbar beim Ausstanzen aus einer Folienbahn.

Aufgrund der konstanten Materialstärke bildet das Adhäsionselement 23 der Werkstückaufnahme 20 ebenfalls eine äußere gekrümmte Oberfläche 21 aus. Diese ist sphärisch, konkav und auf eine Standard-CX-Kurve einer Rohlinse 100 für die Rezeptfertigung von Brillengläsern abgestimmt. Die Rotationsachse A schneidet die gekrümmte Oberfläche 21 im Zentrum lotrecht, insbesondere so, dass die gekrümmte Oberfläche 21 in einer gekrümmten Rotationsfläche rotierbar ist.

Man sieht, dass das folienartige Adhäsionselement 23 die gesamte gekrümmte Oberfläche 21 ausbildet. Hierfür haben das Adhäsionselement 23 und das Trägerelement 25 einen gleich großen radialen Durchmesser.

An der gekrümmten Oberfläche 21 hat das Adhäsionselement 23 adhäsive Eigenschaften. Hierfür ist das Adhäsionselement 23 aus einem adhäsiven Material gefertigt, bei welchem die adhäsiven Eigenschaften durch Van-der-Waals-Kräfte bewirkt sind. Es eignen sich als Materialien insbesondere Zusammensetzungen basierend auf Polyvinylchlorid (PVC), Polyethylen (PE) oder Silikon (insbesondere auf Poly(organo)siloxanen). Damit besteht die Werkzeugaufnahme 10 und das Trägerelement 25 aus einem härteren Material als das Adhäsionselement 23. Außerdem ist das Adhäsionselement 23 derart elastisch verformbar, dass es sich an die Oberflächenkrümmung einer Rohlinse 100 anpasst, zumindest im Mikrometerbereich.

Die adhäsiven Eigenschaften des Adhäsionselements 23 sind so stark, dass eine gehalterte Rohlinse 100 in keiner Winkellage abfällt. Vorzugsweise sind die adhäsiven Eigenschaften des Adhäsionselements 23 so ausgelegt, dass eine gehalterte Rohlinse 100 mit einer Haltekraft gehaltert wird, welche wenigstens dem zweifachen, besonders bevorzugt wenigstens dem dreifachen des Rohlinsengewichts entspricht.

Ferner erkennt man einen Luftkanal 22, welcher von der Werkzeugaufnahme 10 zur gekrümmten Oberfläche 21 der Werkstückaufnahme 20 führt. Insbesondere mündet er entlang der Rotationsachse A in die kegelförmige Vertiefung in der Stirnseite der Werkzeugaufnahme 10. Gegenüberliegend mündet der Luftkanal 22 durch ein (kleines) Loch 24 durch das Adhäsionselement 23 und in der gekrümmten Oberfläche 21. Von einem Spindelwerkzeug kann so ein Sog im Luftkanal 22 erzeugt werden, welcher unterhalb einer aufgenommenen Rohlinse 100 ein Vakuum erzeugen kann.

Weiterhin ist in Fig. 1 die aufgenommene Rohlinse 100 erkennbar. Mit einer Aufnahmeseite 101 liegt die Rohlinse 100 an der gekrümmten Oberfläche 21 der Werkstückaufnahme 20 an. Die optische Achse der Rohlinse ist dabei koaxial zur Rotationsachse A der Linsenhaltevorrichtung 1 ausgerichtet. Entsprechend der Ausgestaltung der Linsenhaltevorrichtung 1 handelt es sich bei der Aufnahmeseite 101 um eine konvexe Oberfläche, welche insbesondere eine CX-Fläche eines Linsenrohlings für die Brillenglasfertigung ist. Die Aufnahmeseite 101 weist bereits eine mechanisch endbearbeitete optische Qualität auf.

Der Aufnahmeseite 101 liegt eine Bearbeitungsseite 102 der Rohlinse 100 gegenüber. Diese Bearbeitungsseite 102 ist konkav und durch mechanische Bearbeitung zu einer sogenannten (individuellen) Rezeptfläche gestaltbar.

Man erkennt, dass die Linsenhaltevorrichtung 1, insbesondere das Trägerelement 25 und das Adhäsionselement 23 nicht radial über die Rohlinse 100 hinausstehen. Hierfür haben das Trägerelement 25 und das Adhäsionselement 23 jeweils einen kleineren Durchmesser als die Rohlinse 100. Damit kann die Bearbeitungsseite 102 bis zu ihrem Rand bearbeitet werden.

Die Erfindung ist nicht auf eine der vorbeschriebenen Ausführungsformen beschränkt, sondern in vielfältiger Weise abwandelbar.

Insbesondere kann eine Ergänzung von Rillen in der gekrümmten Oberfläche vorgesehen werden, welche mit dem Loch 24 in Verbindung stehen. Damit kann ein erzeugtes Vakuum großflächig und gleichmäßig verteilt werden. Dies ist insbesondere bei großen Rohlinsen hilfreich. Die Rillen werden dann beispielsweise sonnenstrahlförmig, sternförmig oder ringförmig mit Verteilerkanälen um das Loch 24 gestaltet.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 1 | Linsenhaltevorrichtung | 24 | Loch |
| | | 25 | Trägerelement |
| 10 | Werkzeugaufnahme | | |
| 11 | Spindelverbindung | 100 | Rohlinse |
| | | 101 | Aufnahmeseite |
| 20 | Werkstückaufnahme | 102 | Bearbeitungsseite |
| 21 | gekrümmte Oberfläche | | |
| 22 | Luftkanal | A | Rotationsachse |
| 23 | Adhäsionselement | | |

## Patentansprüche

1. Linsenhaltevorrichtung (1) zum Haltern einer Rohlinse (100) in einer Bearbeitungsmaschine,
• mit einer Werkzeugaufnahme (10) zum Festlegen der Linsenhaltevorrichtung (1) in einem Bearbeitungswerkzeug, und
• mit einer Werkstückaufnahme (20) zur Aufnahme einer zu bearbeitenden Rohlinse (100),
• wobei die Werkstückaufnahme (20) eine gekrümmte Oberfläche (21) hat und mit der Werkzeugaufnahme (10) verbunden ist, und
• wobei ein Luftkanal (22) von der Werkzeugaufnahme (10) zur gekrümmten Oberfläche (21) der Werkstückaufnahme (20) führt,
**dadurch gekennzeichnet,**
• **dass** die Werkstückaufnahme (20) ein Adhäsionselement (23) aufweist, das zumindest teilweise die gekrümmte Oberfläche (21) ausbildet,
• wobei das Adhäsionselement (23) an der gekrümmten Oberfläche (21) adhäsive Eigenschaften hat.

2. Linsenhaltevorrichtung (1) nach Anspruch 1, **dadurch kennzeichnet, dass** das Adhäsionselement (23) eine Folie oder eine Matte ist.

3. Linsenhaltevorrichtung (1) nach einem der Ansprüche 1 oder 2, **dadurch kennzeichnet, dass** das Adhäsionselement (23) aus einem adhäsiven Material besteht.

4. Linsenhaltevorrichtung (1) nach einem der vorhergehenden Ansprüche, **dadurch kennzeichnet, dass** die adhäsiven Eigenschaften des Adhäsionselements (23) durch Van-der-Waals-Kräfte bewirkt sind.

5. Linsenhaltevorrichtung (1) nach einem der vorhergehenden Ansprüche, **dadurch kennzeichnet, dass** das Adhäsionselement (23) austauschbar ist.

6. Linsenhaltevorrichtung (1) nach einem der vorhergehenden Ansprüche, **dadurch kennzeichnet, dass** das Adhäsionselement (23) eine Materialstärke von 0,5 mm bis 1,5 mm aufweist.

7. Linsenhaltevorrichtung (1) nach einem der vorhergehenden Ansprüche, **dadurch kennzeichnet, dass** die gekrümmte Oberfläche (21) sphärisch ist.

8. Linsenhaltevorrichtung (1) nach einem der vorhergehenden Ansprüche, **dadurch kennzeichnet, dass** die gekrümmte Oberfläche (21) konkav ist.

9. Linsenhaltevorrichtung (1) nach einem der vorhergehenden Ansprüche, **dadurch kennzeichnet, dass** die Werkstückaufnahme (20) ein Trägerelement (25) aufweist, welches einteilig mit der Werkzeugaufnahme (10) ausgebildet ist und welches das Adhäsionselement (23) trägt.

10. **Verfahren** zur Bearbeitung von Rohlinsen (100) mit einer Linsenhaltevorrichtung (1) gemäß einem der Ansprüche 1 bis 9, wobei folgende Schritte durchgeführt werden:
a) Andrücken einer Rohlinse (100) an die gekrümmte Oberfläche (21);
b) Fixieren der Rohlinse (100) an der Linsenhaltevorrichtung (1) während einer mechanischen Bearbeitung durch die adhäsiven Eigenschaften des Adhäsionselements (23) und durch Erzeugung eines Unterdrucks im Luftkanal (22) sowie zwischen der gekrümmten Oberfläche (21) und der Rohlinse (100);
c) Durchführen eines Arbeitsschritts, wobei die Rohlinse (100) ausschließlich durch die adhäsiven Eigenschaften des Adhäsionselements (23) gehaltert wird.

11. Verfahren nach Anspruch 10, **gekennzeichnet durch** folgenden Schritt:
d) Lösen der Rohlinse (100) von der Linsenhaltevorrichtung (1) **durch** Vibrations-, Schlag- und/oder Druckbeaufschlagung zur Überwindung der adhäsiven Halterung an dem Adhäsionselement (23).

12. Verfahren nach Anspruch 11, **gekennzeichnet durch** folgende Schritte:
e) Wiederholung der Schritte gemäß der Ansprüche 10 und 11;
f) Austausch des Adhäsionselements (23) nach frühestens zehn Wiederholungen.
